Europäisches Patentamt

European Patent Office

Office européen des brevets

(19)

(11) EP 0 580 879 B1

(12) EUROPÄISCHE PATENTSCHRIFT

(45) Veröffentlichungstag und Bekanntmachung des Hinweises auf die Patenterteilung:
17.04.1996 Patentblatt 1996/16

(51) Int. Cl.$^6$: B01D 69/08, B01D 71/10

(21) Anmeldenummer: 92110727.2

(22) Anmeldetag: 25.06.1992

(54) **Verfahren zur Erhöhung der Form- und Spinnstabilität von Kapillarhohlmembranen**

Process for increasing the dimensional and spinning stability of capillar hollow membranes

Procédé d'augmentation de la stabilité dimensionnelle et au filage de membranes capillaires creuses

(84) Benannte Vertragsstaaten:
AT ES FR IT

(43) Veröffentlichungstag der Anmeldung:
02.02.1994 Patentblatt 1994/05

(73) Patentinhaber: **Sächsische Kunstseiden GmbH**
**D-01796 Pirna (DE)**

(72) Erfinder:
• **Gensrich, Heinz-Jürgen Dr. DC**
**D-14513 Teltow (DE)**
• **Bossin, Elke DC**
**D-14532 Kleinmachnow (DE)**
• **Brechling, Christa DC**
**D-01796 Pirna (DE)**
• **Gröbe, Volker Prof. Dr. DC**
**D-14513 Teltow (DE)**
• **Hartwig, Stephan Dr. DC**
**D-39240 Calbe/Saale (DE)**
• **Holtz, Manfred Doz. Dr. DC**
**D-18059 Rostock (DE)**

• **Klünder, Lisa DC**
**D-01796 Pirna (DE)**
• **Müller, Klaus Dr. DC**
**D-01796 Pirna (DE)**
• **Nestler, Lothar DC**
**D-01723 Kesselsdorf (DE)**
• **Paul, Dieter Prof. Dr. DC**
**D-14532 Kleinmachnow (DE)**
• **Vogel, Dieter**
**D-01796 Pirna (DE)**

(74) Vertreter: **Rauschenbach, Marion, Dipl.-Ing.**
**Patentanwältin**
**Sadisdorfer Weg 2 a**
**D-01189 Dresden (DE)**

(56) Entgegenhaltungen:
**EP-A- 0 008 536**          **EP-A- 0 128 325**
**FR-A- 2 026 714**          **GB-A- 2 065 546**

Bemerkungen:
Die Akte enthält technische Angaben, die nach dem Eingang der Anmeldung eingereicht wurden und die nicht in dieser Patentschrift enthalten sind.

**Beschreibung**

Die Erfindung bezieht sich auf die Herstellung von Kapillarhohlmembranen aus Regeneratcellulose nach dem Viskoseverfahren für die Anwendung in der Membrantrenntechnik, vorzugsweise in der Blutdetoxikation.

Es ist bekannt, Kapillarhohlmembranen aus Regeneratcellulose nach dem Viskoseverfahren herzustellen (DD-A-131941, DD-A-132798, DD-A-137366, DD-A-143037).

Hierbei werden Viskosen unterschiedlicher Zusammensetzung und Reife durch Ringschlitzdüsen bekannter Bauart in sauren oder neutralen Fällbädern hohen Salzgehaltes oder in Säurefällbädern niedrigen Salzgehaltes zu Kapillarhohlmembranen verformt, das Cellulosexanthogenat zur Regeneratcellulose zersetzt, die Celluloseregenerathohlmembranen gewaschen, präpariert und getrocknet. Zur Ausbildung und Stabilisierung des Hohlmembranlumens ist die Zudosierung eines sogenannten Lumenfüllers durch die Dornbohrung der Ringschlitzdüse erforderlich, wobei die Dosierung bei Gasen über den Druck, der vor der Düse herrscht, oder bei flüssigen Lumenfüllern durch eine Pumpe gesteuert werden kann.

Dabei hat es sich als ökonomisch sehr vorteilhaft erwiesen, mit gasförmigen Lumenfüllern zu arbeiten, die im Gegensatz zu lumenstabilisierenden rückstandsfrei extraktionsnotwendigen flüssigen Lumenfüllern nach der Herstellung aus den Kapillarhohlmembranen und/oder daraus erzeugten Membrantrenneinheiten, z. B. künstlichen Nieren, nicht entfernt werden müssen.

Die Anwendung dieses Vorteils, der insbeondere bei Viskosen mit Hottenrothreifen kleiner 10 Grad besonders günstig nutzbar ist (DD-A-131941, DD-A-137366), wird aber dann eingeschränkt, wenn nach diesem Verfahren Kapillarhohlmembranen aus Viskosen niedrigen Cellulosegehaltes, die u. a. aufwandsarm durch Verdünnen üblicher Betriebsviskosen zu erhalten sind, gebildet werden sollen. Hier entstehen oft zu stark oval ausgeprägte und/oder dimensionsunrichtige zu große Kapillarhohlmembranen, die insbesondere im Einsatzgebiet Blutdetoxikation zu blutschädigenden Komplikationen führen, oder aber Probleme bei der Verarbeitung zu Trenneinheiten, z. B. den künstlichen Nieren, durch Knickanfälligkeit bereiten, obwohl sie gerade im Membranstofftransport hocheffektiv sind.

Zwar ist es möglich, auch durch Anheben des Glycerolgehaltes der Kapillarhohlmembranen die Leistungsfähigkeit zu beeinflussen, wodurch mit steigendem Glycerolgehalt auch höhere Membranstofftransportraten erreicht werden, jedoch kann dieser Effekt nicht weitgehend günstig ausgenutzt werden, da Glycerolgehalte der Kapillarhohlmembranen von größer ca. 70 g/100 g Cellulose zu ungeeigneten Einbettungen in Polyurethanvergußmassen führen, den heute gebräuchlichsten Vergußmassen zur Herstellung von Hohlfaserdialysatoren.

Auch die Verwendung wäßriger fällend wirkender Lumenfüller, die eine ähnliche Zusammensetzung wie obige Fällbäder besitzen, ist eine gute Möglichkeit, hochpermeable Hohlmembranen zu bilden, da die Fällmittel kontinuierlich im Waschprozeß der Herstellung und damit ökonomisch günstig entfernt werden können. Obwohl hier sehr gut dimensiongerechte Kapillarhohlmembranen ausgebildet werden können, werden diese aber teilweise bereits beim Waschprozeß oder aber bei der Trocknung, die oft nur diskontinuierlich ohne allzu großen Ausschuß betrieben werden kann, unrund oder sogar bändchenförmig. Somit ist es auf diesem Wege auch nicht ökonomisch effektiv, Kapillarhohlmembranen hohen Stofftransports herzustellen. Bisher erweist sich dafür die ökonomisch aufwendige Verwendung von Kapillarhohlmembranen, die durch Benutzung von rückstandsfrei extraktionsnotwendigen inerten flüssigen Lumenfüllern, z. B. Fettsäureestern, erzeugt werden, als einzige Alternative. Dabei entstehen besonders nach DD-A-143037 bei Hottenrothreifen der Viskose größer gleich 10 Grad Mehrschichtmembranen hoher Membranleistung.

Die Verwendung gasförmiger Lumenfüller ist aber auch hier auf Viskosen sehr hohen Cellulosegehaltes beschränkt, so daß sie wiederum wenig effektiv sind oder aber andererseits sich unrund verformen.

Es besteht die Aufgabe, durch Einflußnahme mittels weiterer Zusätze zu den mit Wasser oder Natronlauge zu verdünnenden Viskosen die Lumenbildung mit gasförmigen Lumenfüllern so zu stabilisieren und/oder die Spinnstabilität mit gasförmigen Lumenfüllern so einzustellen, daß bei Viskosereifen von 3 bis 10 Grad formstabile und dimensionsrichtige Kapillarhohlmembranen mit Innendurchmessern von 180 bis 260 µm sowie einer Rundheit von $0,9 \pm 0,1$, gekennzeichnet als Quotient aus dem kleinen und dem großen Durchmesser des Hohlmembranquerschnittes, aus Regeneratcellulose entstehen und die Membranleistung der Kapillarhohlmembranen mindestens erhalten bleibt.

Unter Spinnstabilität ist dabei zu verstehen, daß ein Differenzgasdruck (DGD) zwischen dem Spinndruck zum Erreichen dimensionsrichtiger verschlußstellenfreier Hohlmembranen und dem Entstehungsdruck einer solchen Hohlmembran aus dem Vollfaden (Alternierungdruck), gemessen vor der Hohlkerndüse, von größer gleich 20 Pa (ca. 2 mm Wassersäule) auftritt, bei dem der erforderliche Innendurchmesser erreicht wird. Erfindungsgemäß wird die Aufgabe gelöst, wenn den Viskosen vor ihrer Verspinnung zu Kapillarhohlmembranen nach an sich bekannten Verfahren zusätzlich zu den Verdünnungsmitteln Wasser und/oder Natronlauge spezielle wasser- und/oder natronlaugelösliche anorganische Salze und/oder wasser- und/oder natronlaugelösliche organische OH-gruppenhaltige Verbindungen in Mengen von 0,1 bis 20 g/100 g Spinnlösung allein oder deren Gemische mit Wasser oder Natronlauge hinzugefügt und diese Viskosen dann bei einer Viskosereife von 3 bis 10 Grad Hottenroth zu Kapillarhohlmembranen verformt werden.

Als anorganische Salze haben sich solche besonders bewährt, die sich in Wasser oder Natronlauge leicht lösen und deren Kationen in der alkalischen Viskoselösung nicht als Hydroxide oder Sulfide gefällt werden. Bei den anorganischen Salzen handelt es sich insbesondere um die Alkali-, Erdalkali- und/oder Ammoniumsalze anorganischer Säuren.

Vorteilhaft sind Salze der Anionen zu verwenden, die bereits im Fällbad enthalten sind, was die Aufarbeitung der Fällbäder nicht verkompliziert. Als besonders wirksam haben sich die Ammonium- und die Natriumsalze erwiesen, d.h. für den Fall der üblichen Fällbäder mit Sulfat-Ionen Ammonium- und/oder Natriumsulfat. Die anzuwendenden Salzmengen sind prozeßgünstig, insbesondere in Mengen von 0,1 bis 5 g, bevorzugt 1 bis 3 g, je 100 g Spinnlösung, einzusetzen.

Als organische OH-gruppenhaltige Verbindungen haben sich solche mit Molmassen von 30 bis zu ca. 1 000 g/Mol, insbesondere von 150 bis 1 000 g/Mol, bewährt, wobei vorzugsweise ein- bzw. mehrwertige Alkohole, insbesondere niedere aliphatische Verbindungen mit 1 bis 6 C-Atomen und 1 bis 6 OH-Gruppen, wie z.B. Ethanol oder Butandiol oder Glycerol, bevorzugt, aber solche mit nicht benachbarten OH-Gruppen, wie Butandiol-1,4 oder Propandiol-1,3, oder aber Polyole, speziell Polyetherglykole, wie z.B. Triethylenglykol, Polyethylenglykole oder Polypropylenglykolglycerolether, allein oder deren Gemische verwendet werden, wobei die besonders wirksamen Mengen im Bereich von 2 bis 20, vorzugsweise zwischen 5 bis 15 g/100 g Spinnlösung liegen.

Bei der Verwendung solcher Zusätze entstehen Kapillarhohlmembranen, die bereits im Fällbad dem Verformungsdruck des über den Hohlkern üblicher Hohlkerndüsen dosierten Lumenfüllers einen größeren Widerstand entgegensetzen als vergleichbare Viskosen ohne Zusatz, die nur mit Wasser und/oder Natronlauge verdünnt wurden, so daß der DGD bei vergleichbaren Abmessungen höher liegt, Dadurch wird es wesentlich einfacher, dimensionsrichtige Kapillarhohlmembranen und auch solche mit keinem Durchmesser technisch sicher herzustellen, da die Gasdruckabhängigkeit der Abmessungen verringert wird. Dabei gelten als technisch beherrschbare DGD solche von mindestens 20 Pa, bei deren Erreichen Spinnsicherheit gewährleistet ist.

Darüberhinaus besitzen mit solchen Zusätzen erzeugte Kapillarhohlmembranen einen über den gesamten Bereich der Herstellung reichenden größeren Deformationswiderstand, der dadurch erkennbar ist, daß runde und nicht zu stark oval verformte Kapillarhohlmembranen z.B. von den Waschwalzen des Herstellungsprozesses ablaufen, wodurch eine kontinuierliche Erzeugung formstabiler Kapillarhohlmembranen sicher wird, obwohl diese Substanzen durch den Waschprozeß vollständig aus der Cellulose entfernt werden. Nach der Trocknung besitzen solche Kapillarhohlmembranen eine Rundheit von 0,9 ± 0,1.

Das erfindungsgemäße Zumischen der wirksamen Substanzen kann sowohl im Verlauf der Viskoseherstellung als auch danach bis unmittelbar vor der Viskoseverformung durchgeführt werden, wobei auf eine intensive Durchmischung zu achten ist. Vorteilhaft, aber nicht unbedingt erforderlich ist die Verwendung wäßriger oder natronalkalischer wäßriger Lösungen dieser Substanzen, die den verfügbaren und/oder verdünnten Viskosen einfach durch Rühren oder Strahlmischen in den erforderlichen Mengen zugesetzt und in ihnen homogen verteilt werden. Hierbei sind niedrige Temperaturen im Bereich von 0 bis 40 °C vorzuziehen, um das Abreifen der Viskose nicht zu stark zu beschleunigen, aber auch höhere Temperaturen bis ca. 60 °C sind bei kurzzeitiger Anwendung vertretbar.

Es wurde weiterhin gefunden, daß es durch die erfindungsgemäße Zumischung nicht zu einer Verschlechterung der Membraneigenschaften, wie z.B. der Wasserdurchlässigkeit (WD) als Maß für die zur Permeation zur Verfügung stehende Porösität und damit zu einer nachteiligen Verdichtung der Struktur, kommt. Hierbei wurde die WD, wie in Medizintechnik 21 (1981), S. 2 bis 6 beschrieben, bestimmt und auf die Maßeinheit $cm^3/h.m^2.kPa$ umgerechnet.

**Das Beispiel 1 stellt den Stand der Technik dar.**

Beispiel 1: Eine übliche Betriebsviskose mit einem Cellulosegehalt von 8,3 g und einem Alkaligehalt von 6,2 g, bezogen auf 100 g Viskose, die mit 34 g $CS_2$, bezogen auf 100 g Cellulose, hergestellt worden war, wurde bei einer Hottenrothreife (H) von 4,5 ° nach DD-A-131 941 (Beispiel 1) zu Kapillarhohlmembranen verformt. Das Fällbad enthielt zusätzlich 40 g/l $H_2O$. Der Verzug hatte einen Wert von 1,4. Es wurde eine Hohlkerndüse mit einem Hohlkernbohrungsdurchmesser von 190 µm eingesetzt.

Die entstehenden Hohlmembranen wurden 1 : 1,2 gereckt, zersetzt, salz- und säurefrei gewaschen, durch eine glycerolhaltige Avivagelösung mit einer Glycerolauflage von 67 g bzw. 106 g (jeweils bezogen auf 100 g Cellulose) versehen und anschließend isometrisch getrocknet. Der DGD zum Erreichen des Innendurchmessers $d_i$ von 224 ± 20 µm im getrockneten Zustand betrug bei Verwendung einer Düse mit einem Hohlkernbohrungsdurchmesser von 190 µm 30 Pa. WD erreichte Werte von 37,8 (67 g Glycerolauflage, bezogen auf 100 g Cellulose) bzw. 45,2 $ml/h.m^2.kPa$ (106 g Glycerolauflage/100 g Cellulose). Die Rundheit (R) beträgt 0,92 bzw. 0,90. Im wiederaufgequollenen Zustand hatten die Kapillarhohlmembranen Wandstärken (W) von 30 bzw. 34 µm.

Beispiel 2: Entsprechend Beispiel 1 wurden Kapillarhohlmembranen nach Verdünnung der Viskose mit Wasser auf einen Cellulosegehalt von 7,0 g/100 g Spinnlösung bei einer Reife 4,8 °H mit einer Glycerolauflage von 63 g (bezogen auf 100 g Cellulose) erzeugt.

$$di = 221 \pm 35\ \mu m \qquad R = 0,72 \qquad W = 27\ \mu m$$

$$DGD = 8,8\ Pa \qquad WD = 68,9\ cm^3/h.m^2.kPa$$

Die Durchgängigkeit des Lumens war mehrfach unterbrochen. Die Hohlmembranen konnten somit zwar dimensionsrichtig, aber nicht verschlußstellenfrei und auch nicht technisch sicher mit der erforderlichen Rundheit hergestellt werden.

Beispiel 3: Nach Beispiel 1 wurde eine Viskose bei einer Reife 3,9 °H verformt, die mit Natronlauge auf 7,05 g Cellulose und 7,05 g Alkali (bezogen auf 100 g Spinnlösung) verdünnt war. Die Glycerolauflage betrug 112 g (bezogen auf 100 g Cellulose):

$$d_i = 209 \pm 31 \ \mu m \qquad R = 0,74$$

$$DGD = 10,8 \ Pa \qquad WD = 79,7 \ cm^3/h.m^2.kPa$$

Gelegentlich Verschlußstellen im Lumen der Hohlmembranen. Spinnsicherheit und Rundheit sind unbefriedigend.

Beispiel 4: Es wurde wie im Beispiel 1 verfahren, mit dem Unterschied, daß der Viskose 2,5 g $Na_2SO_4$ und 15 g Wasser pro 100 g Spinnlösung zugesetzt wurden (69 g Glycerolauflage pro 100 g Cellulose):

$$d_i = 203 \pm 10 \ \mu m \qquad R = 0,95$$

$$DGD = 47,0 \ Pa \qquad WD = 44,8 \ cm^3/h.m^2.kPa$$

Beispiel 5: Es wurde wie im Beispiel 1 verfahren, mit dem Unterschied, daß der Viskose 2,5 g $(NH_4)_2SO_4$ und 15 g Wasser pro 100 g Spinnlösung enthielt (71 g Glycerolauflage/100 g Cellulose):

$$d_i = 200 \pm 11 \ \mu m \qquad R = 0,96$$

$$DGD = 50,0 \ Pa \qquad WD = 49,8 \ cm^3/h.m^2.kPa$$

Beispiel 6: Die Viskose aus Beispiel 1 wurde mit Butandiol-1,4 und Natronlauge so versetzt, daß sie eine Zusammensetzung von 7,0 g Cellulose, 7,2 g Alkali und 9,3 g Butandiol-1,4 (jeweils bezogen auf 100 g Spinnlösung) hatte, und nach Beispiel 1 verformt, wobei die Glycerolauflage 58 g (bezogen auf 100 g Cellulose) betrug:

$$d_i = 206 \pm 21 \ \mu m \qquad R = 0,86$$

$$DGD = 40,2 \ Pa \qquad WD = 95 \ cm^3/h.m^2.kPa$$

Beispiel 7: Es wurde nach Beispiel 6 verfahren und an Stelle von Butandiol-1,4 Triethylenglykol genommen, so daß die zu verformende Viskose eine Zusammensetzung von 7,1 g Cellulose, 5,3 g Alkali und 15,0 g Triethylenglykol (jeweils bezogen auf 100 g Spinnlösung) hatte.

Glycerolauflage: 61 g (bezogen auf 100 g Cellulose)

$$d_i = 205 \pm 19 \ \mu m \qquad R = 0,83$$

$$DGD = 32,3 \ Pa \qquad WD = 104,1 \ cm^3/h.m^2.kPa$$

Beispiel 8: Entsprechend Beispiel 6 wurde die Viskose auf folgende Zusammensetzung durch Vermischen der Komponenten gebracht: 7,05 g Cellulose, 7,05 g Alkali, 4,1 g Butandiol-1,4, 4,1 g Polypropylenglykolglycerolether der Molmasse 400 (jeweils bezogen auf 100 g Spinnlösung). Diese verdünnte Viskose ergab bei einer Reife von 4,4 °H einen Verzug von 1,6 und bei einer Glycerolauflage von 98 g/100 g Cellulose folgende Hohlmembrankenndaten:

$$d_i = 208 \pm 21 \ \mu m \qquad R = 0,87$$

$$DGD = 46,0 \ Pa \qquad WD = 153 \ cm^3/h.m^2.kPa.$$

Beispiel 9: Es wurden Kapillarhohlmembranen der Glycerolauflage 82 g/100 g Cellulose nach Beispiel 6 aus einer Viskose der Reife 5,0 °H mit der Zusammensetzung 7,5 g Cellulose, 6,1 g Alkali, 3,1 g Butandiol, 3,1 g Polyethylenglykol der Molmasse 400 und 2,3 g Natriumsulfat (jeweils bezogen auf 100 g Spinnlösung) erzeugt. Folgende Kenndaten wurden erhalten:

$$d_i = 204 \pm 18 \ \mu m \qquad R = 0,91$$

$$DGD = 51,9 \text{ Pa} \qquad WD = 55,6 \text{ cm}^3/\text{h.m}^2.\text{kPa}$$

Beispiel 10: Einer Viskose aus Beispiel 1 wurde Glycerol hinzugefügt, so daß die Zusammensetzung 6,4 g Cellulose, 4,8 g Alkali und 17,3 g Glycerol, jeweils bezogen auf 100 g Spinnlösung, betrug. Die mit einer Reife von 3,7°H nach Beispiel 1 ersponnenen Kapillarhohlmembranen hatten nach dem Trocknen einen Glycerolgehalt von 41 g/100 g Cellulose und folgende Kenndaten:

$$d_i = 218 \pm 22 \ \mu m \qquad R = 0,82$$

$$DGD = 20,3 \text{ Pa} \qquad WD = 45,7 \text{ cm}^3/\text{h.m}^2.\text{kPa}.$$

Beispiel 12: Es wurde nach Beispiel 1 verfahren und der Viskose eine Menge von 10 g Polyethylenglykol der Molmasse 930 pro 100 g Spinnlöung sowie Natronlauge hinzugefügt, so daß die Spinnlösung eine Zusammensetzung von 7,2 g Cellulose und 6,8 g Alkali, bezogen auf 100 g Spinnlösung, besaß. Bei einer Viskosereife von 3,8 oH ersponnen, waren die entstandenen Hohlfäden mit einem Glycerolgehalt von 75 g/100 g Cellulose versehen.

$$d_i = 223 \pm 21 \ \mu m \qquad R = 0,88$$

$$DGD = 28,0 \text{ Pa} \qquad WD = 77,3 \text{ cm}^3/\text{h.m}^2.\text{kPa}$$

Beispiel 13: Eine Viskose entsprechend Beispiel 1 wurde mit Natronlauge und Polyethylenglykol der Molmasse 600 vermischt. Die verdünnte Viskose enthielt 7,5 g Cellulose, 6,5 g Natronlauge und 10,0 g Polyethylenglykol der Molmasse 600 (jeweils bezogen auf 100 g Spinnlösung). Die daraus geformten Fäden wurden mit einer Glycerolauflage von 60 g (bezogen auf 100 g Cellulose) versehen.

$$d_i = 213 \pm 14 \ \mu m \qquad R = 0,93$$

$$DGD = 30 \text{ Pa} \qquad WD = 55,2 \text{ cm}^3/\text{h.m}^2.\text{kPa}$$

**Patentansprüche**

1.  Verfahren zur Erhöhung der Form- und Spinnstabilität von Kapillarhohlmembranen aus verdünnten Regeneratcellulose nach dem Viskoseverfahren, mit gasförmigen Lumenfüllern, zur Verwendung für die Stofftrennung in flüssigen Phasen, insbesondere für die Blutdetoxikation in künstlichen Nieren, durch Verformung bei Viskosereifen von 3 bis 10 Grad Hottenroth, gekennzeichnet dadurch, daß der Viskose vor ihrer Verformung zusätzlich zu den Verdünnungsmitteln Wasser und/oder Natronlauge wasser- und/oder natronlaugelösliche anorganische Salze in Mengen von 0,1 bis 5 g/100 g Spinnlösung, wobei deren Kationen nicht als Hydroxide oder Sulfide gefällt werden dürfen, und/oder organische OH-gruppenhaltige wasser- und/oder natronlaugelösliche Verbindungen mit Molmassen von 30 bis 1000 g/Mol, in Mengen von 0,1 bis 20 g/100 g Spinnlösung, allein oder im Gemisch mit Wasser oder Natronlauge, hinzugefügt werden.

2.  Verfahren nach Anspruch 1, gekennzeichnet dadurch, daß die anorganischen Salze als Kationen Alkali- und/oder Ammoniumverbindungen und als Anionen Säurereste anorganischer Säuren besitzen.

3.  Verfahren nach Anspruch 2, gekennzeichnet dadurch, daß die Anionen wasserlöslicher anorganischer Salze Sulfate sind.

4.  Verfahren nach Anspruch 1 bis 3, gekennzeichnet dadurch, daß die anorganischen Salze Ammonium- und/oder Natriumsulfat sind.

5.  Verfahren nach Anspruch 1 bis 4, gekennzeichnet dadurch, daß die anorganischen Salze in Mengen von 1 bis 3 g/100 g Spinnlösung eingesetzt werden.

6.  Verfahren nach Anspruch 1, gekennzeichnet dadurch, daß die organischen OH-gruppenhaltigen Verbindungen ein- und/oder mehrwertige aliphatische Alkohole sind.

7.  Verfahren nach Anspruch 1 bis 6, gekennzeichnet dadurch, daß die mehrwertigen Alkohole solche mit nicht benachbarten OH-Gruppen sind.

**8.** Verfahren nach Anspruch 1, 6 und 7, gekennzeichnet dadurch, daß die OH-gruppenhaltigen Verbindungen Polyole sind.

**9.** Verfahren nach Anspruch 1 und 6 bis 8, gekennzeichnet dadurch, daß die mehrwertigen Alkohole mit nicht benachbarten OH-Gruppen Triethylenglykol und/oder Butandiol-1,4 und/oder Butandiol-1,3 und/oder Polypropylenglykolglycerolether und/oder Polyethylenglykol sind.

**10.** Verfahren nach Anspruch 1 und 6 bis 9, gekennzeichnet dadurch, daß die organischen OH-gruppenhaltigen Verbindungen in Mengen von 2 bis 20 g/100 g Spinnlösung eingesetzt werden.

**11.** Verfahren nach Anspruch 1 und 6 bis 10, gekennzeichnet dadurch, daß die Molmassen der OH-gruppenhaltigen Verbindungen 150 bis 1000 g/Mol betragen.

## Claims

**1.** Method for increasing the stability in forming and spinning hollow capillary membranes made from regenerated cellulose by the viscose process, using gaseous lumen fillers, for use for the separation of substances in liquid phases, in particular for blood detoxication in artificial kidneys, by forming with viscose ripening of 3 to 10 degrees Hottenroth, characterised in that to the diluted viscose prior to its being formed, in addition to the diluents water and/or sodium hydroxide solution are added inorganic salts which are water-soluble and/or soluble in sodium hydroxide solution, in quantities of from 0.1 to 5 g/100 g of spinning solution, during which the cations thereof must not be precipitated as hydroxides or sulphides, and/or organic compounds which contain OH groups and are water-soluble and/or soluble in sodium hydroxide solution, having molar masses of from 30 to 1000 g/mol, in quantities of from 0.1 to 20 g/100 g of spinning solution, alone or mixed with water or sodium hydroxide solution.

**2.** Method according to claim 1, characterised in that the inorganic salts contain as cations alkali compounds and/or ammonium compounds and as anions acid radicals of inorganic acids.

**3.** Method according to claim 2, characterised in that the anions are sulphates of water-soluble inorganic salts.

**4.** Method according to claims 1 to 3, characterised in that the inorganic salts are ammonium sulphate and/or sodium sulphate.

**5.** Method according to claims 1 to 4, characterised in that the inorganic salts are used in quantities of from 1 to 3 g/100 g of spinning solution.

**6.** Method according to claim 1, characterised in that the organic compounds containing OH groups are monohydric and/or polyhydric aliphatic alcohols.

**7.** Method according to claims 1 to 6, characterised in that the polyhydric alcohols are those having OH groups not adjacent to one another.

**8.** Method according to claims 1, 6 and 7, characterised in that the compounds containing OH groups are polyols.

**9.** Method according to claims 1 and 6 to 8, characterised in that the polyhydric alcohols having OH groups not adjacent to one another are triethylene glycol and/or butanediol-1,4 and/or butanediol-1,3 and/or polypropylene glycol glycerol ether and/or polyethylene glycol.

**10.** Method according to claims 1 and 6 to 9, characterised in that the organic compounds containing OH groups are used in quantities of from 2 to 20 g/100 g of spinning solution.

**11.** Method according to claims 1 and 6 to 10, characterised in that the molar masses of the compounds containing OH groups are from 150 to 1000 g/mol.

## Revendications

**1.** Procédé pour augmenter la stabilité au formage et au filage de membranes creuses capillaires en cellulose régénérée selon le procédé de la viscose, avec des gaz se trouvant dans l'espace intérieur des fils creux, pour l'utilisation destinée à la séparation de matières en phases liquides en particulier pour la détoxication du sang dans des reins artificiels (dialyse) de la diminution du degré de polymérisation de la viscose de 3 à 10 unités de mesure Hottenroth, caractérisé en ce qu'à la viscose diluée on ajoute avant son formage en plus des agents de dilution l'eau et/ou la lessive de soude des sels minéraux solubles dans l'eau et/ou dans la lessive de soude en quantité de 0,5 à 5 g/100 g de solution à filer, leurs cations ne devant pas être précipités en hydroxydes ou sulfures, et/ou des composés organiques contenant des groupes OH, solubles dans l'eau et/ou solubles dans la lessive de soude avec des masses molaires de 30 à 1 000 g/mole, en quantités de 0,1 à 20 g/100 g de solution à filer, seuls ou en mélange avec de l'eau ou de la lessive de soude.

2.  Procédé selon la revendication 1, caractérisé en ce que les sels minéraux possèdent comme cations des composés alcalins et/ou d'ammonium et comme anions des radicaux acides d'acides minéraux.

3.  Procédé selon la revendication 2, caractérisé en ce que les anions de sels minéraux solubles dans l'eau sont des sulfates.

4.  Procédé selon les revendications 1 à 3, caractérisé en ce que les sels minéraux sont du sulfate d'ammonium et/ou de sodium.

5.  Procédé selon les revendications 1 à 4, caractérisé en ce que les sels minéraux sont utilisés en quantités de 1 à 3 g/100 g de solution à filer.

6.  Procédé selon la revendication 1, caractérisé en ce que les composés organiques contenant des groupes OH sont des alcools aliphatiques mono et/ou plurivalents.

7.  Procédé selon les revendications 1 à 6, caractérisé en ce que les alcools plurivalents sont ceux ayant des groupes OH non voisins.

8.  Procédé selon les revendications 1, 6 et 7, caractérisé en ce que les composée contenant des groupes OH sont des polyols.

9.  Procédé selon les revendications 1 et 6 à 8, caractérisé en ce que les alcools plurivalents avec des groupes OH non voisins sont le triéthylèneglycol et/ou le butanediol-1,4 et/ou le butanediol-1,3 et/ou le polypropylèneglycol glycérolether et/ou le polyéthylèneglycol.

10. Procédé selon les revendications 1 et 6 à 9, caractérisé en ce que les composés organiques contenant des groupes OH sont mis en oeuvre en quantités de 2 à 20 g/100 g de solution à filer.

11. Procédé selon les revendications 1 et 6 à 10, caractérise en ce que les masses molaires des composés contenant des groupes OH se montent à 150 jusqu'à 1 000 g/mole.